# EUROPEAN PATENT APPLICATION

(11) **EP 4 300 781 A1**
(43) Date of publication of application: **03.01.2024**
(21) Application number: 22182325.5
(22) Date of filing: 30.06.2022
(51) Int. Cl.: H02K 3/28, H02K 3/12

(54) **STATOR FOR AN ELECTRIC MACHINE, ELECTRIC MACHINE, ELECTRIC DRIVE FOR A VEHICLE AND VEHICLE**

(71) Applicant: Valeo eAutomotive Germany GmbH, 91056 Erlangen (DE)
(72) Inventor: Pugazhenthi, Leo Vijay, 97616 C/o VSeA, Siemensstr. 15, Bad Neustadt a.d.Saale (DE)
(74) Representative: Valeo Powertrain Systems

(57) **Abstract**

Stator (1) for an electric machine (101), comprising:
- a stator core (2) comprising a longitudinal axis (3), an axial first face side (4) and an axial second face side (5) opposite to the first face side (4), the stator core (2) providing an accommodation space (6) for a rotor (102) of the electric machine (101);
- multiple hairpin conductors (9, 10) having first type leg portions (12, 15) and second type leg portions (15), the hairpin conductors (9, 10) being connected to each other so as to form a stator winding; and
- a slot (7) formed within the stator core (2) and radially divided into an inner layer (18) located closest to the accommodation space (6) and into further layers (19a-d) being more distant to the accommodation space (6) than the inner layer (18);
wherein two first type leg portions (12) extend within the inner layer, one second type leg portion (15) extends within each of the further layers (19a-d), in a cross-section perpendicular to the longitudinal axis (3), the radial extent of each of the first type leg portions (12) is smaller than the radial extent of each of the second type leg portions (15), and the first type leg portions (12) are electrically shortcircuited at the first face side (4).

## Description

The present invention relates to a stator for an electric machine, comprising: a stator core comprising a longitudinal axis, an axial first face side and an axial second face side opposite to the first face side, the stator core providing an accommodation space for a rotor of the electric machine; multiple hairpin conductors having first type leg portions and second type leg portions, the hairpin conductors being connected to each other so as to form a stator winding; and a slot formed within the stator core and radially divided into an inner layer located closest to the accommodation space and into further layers being more distant to the accommodation space than the inner layer; wherein two first type leg portions extend within the inner layer; one second type leg portion extends within each of the further layers and, in a cross-section perpendicular to the longitudinal axis, the radial extent of each of the first type leg portions is smaller than the radial extent of each of the second type leg portions.

Further, the present invention relates to an electric machine, to an electric drive for a vehicle and to a vehicle.

WO 2021/074563 A1 discloses a stator assembly for an electric motor, the stator assembly comprising a stator body, a plurality of slots formed in the stator body and a phase winding comprising a plurality of hairpin windings electrically connected together. Each slot comprises radial slot positions, each radial slot position having an arm of the hairpin winding located therein. The arms at the first and second radial slot position have a larger cross-sectional area then arms at the third and fourth radial slot position, wherein an outer winding layer occupies the first and second radial slot positions and an inner winding layer occupies the third and fourth radial slot position.

In stators with the stator winding formed by hairpin conductors, higher AC copper losses occur in leg portions disposed close to an accommodation space for a rotor compared with leg portions that are more distant to the accommodation space. Such AC copper losses increase the current density along the first type leg portion, which causes a reduction in performance and efficiency of the electric machine, disadvantageously.

It is an object of the present invention to provide a possibility to operate an electric machine with a stator winding formed by hairpin conductors with improved performance and efficiency.

According to the invention, this object is solved by a stator as initially described, in which the first type leg portions are electrically short-circuited at the first face side.

The stator for an electric machine according to the invention comprises a stator core. The stator core comprises a longitudinal axis, an axial first face side and an axial second face side. The second face side is opposite to the first face side. The stator core provides an accommodation space for a rotor of the electric machine. The stator further comprises multiple hairpin conductors. The hairpin conductors have first type leg portions and second type leg portions. The hairpin conductors are connected to each other so as to form a stator winding. The stator further comprises a slot. The slot is formed within the stator core. The slot is radially divided into an inner layer and further layers. The inner layer is located closest to the accommodation space. The further layers are more distant to the accommodation space than the inner layer. Two first type leg portions extend within the inner layer. One second type leg portion extends within each of the further layers. In a cross-section perpendicular to the longitudinal axis, the radial extent of each of the first type leg portions is smaller than the radial extent of each of the second type leg portions. The first type leg portions are electrically short-circuited at the first face side.

In conventional stators with a single leg portion, which extends within the inner layer and has the same radial extent as other leg portions in the slot, due to the proximity effect there will be a non-uniform current distribution in the leg portions extending within the inner layer, which results in higher copper losses. This leads to an unbalanced heating of the leg portions in the slot. By providing the two first type leg portions being short-circuited at the first face side and having a smaller radial extent or thickness, respectively, than the second type leg portions, the resistance of the two short-circuited first type leg portions can be increased in comparison to the afore-mentioned single leg portion. The increase of the resistance counteracts the proximity effect and allows a balanced distribution of the current density inside the slot, which consequently avoids an overheating within the inner layer. Advantageously, an electric machine with the stator according to the invention can be operated more efficiently and with higher performance.

Preferably, the stator core formed by a plurality of axially stacked and/or mutually insulated sheets of metal. Preferably, the accommodation space is circumferentially surrounded by the stator core so as to form an air gap between the rotor and the stator core. The terms "axial", "radial" and "circumferential" refer to the longitudinal axis of the stator core.

The stator may comprise further corresponding slots. The slot and the further slots may be distributed in circumferential direction in the stator core. In each further slot, two further first type leg portions may extend within the inner layer of a respective one of the further slots and one second type leg portion may extend within each of the further layers. All statements concerning the slot, the first type leg portions and the second type leg portions may apply analogously to the further slots, the further first type leg portion and the further second type leg portions.

The stator winding may be configured to split up a current at the second face side so that two partial currents flow through the two first type leg portions two and are guided together by the short-circuit at the first face side. In the cross-section, each leg portion may have two long sides and two short sides. The smaller radial extent of each of the first type leg portions may be realized by the first type leg portions having smaller short sides than the further leg portions. Preferably, the two long sides are parallel and/or the two short sides are parallel. It is further possible that the long sides of the first type and second type leg portions have the same length. Preferably, the layers of the slot or a respective one of the slots have the same radial extent or the inner layers might have a greater extent. Besides, the total number of layers being the sum of the number of inner layers and the number of further layers may be an even number, e.g., two or four or six or eight or ten or twelve.

The cross-section surface of a first type leg, accommodated in the inner layer, might be precisely the cross section surface of a further leg accommodated in a further layer divided by the number of first type legs accommodated in the inner layer.

The total copper cross-sections surface of any leg might always be the same for any inner and further layer. This means, for example in case that there are two first type legs in the inner layer, their copper cross-sections surface might be half the size of copper cross-sections surface of a leg in further layers. In another example, when there are three first legs in the inner layer, then their copper cross-sections surface might be a third of the size of the copper cross-sections surface of a leg in the further layers.

The cross-section surface of the inner layer might be larger than the cross-section surface of any of the further layers.

With regard to the stator according to the invention, the first type leg portions may be short-circuited by means of a welding connection of connection portions of the hairpin conductors, each connection portion extending out of the stator core at the first face side.

Preferably, the first type leg portions are formed by first type hairpin conductors each having the first type leg portion and a connection portion at the second face side, the connection portion being connected in an electrically conductive and mechanical manner with the connection portion of another one of the first type hairpin conductors outside the stator core. The first type hair pin conductors may be considered as I-pins. Preferably, each first type hair pin conductor is formed by a single bent metal rod. An I-pin may be defined as a metal rod extending on both sides of the stator, and being connected by a connection process. The connection process can be "welding", "soldering" or "clamping" or any other process which allows the electrical current to flow.

Advantageously, pairs of second type leg portions are formed by second type hairpin conductors each having the pair of second type leg portions and a bending portion at the second face side, each second type hairpin conductor being formed by a single bent metal rod. The second type hairpin conductors may be considered as U-pins..

With regard to the stator according to the invention, at least one further first type leg portion extends within the inner layer. In other words, the number of first type leg portions extending within the inner layer may be three or four or five or greater than five. This allows an even higher increase of the resistance.

With regard to the stator according to the invention, the slot may be further divided into a second inner layer located between the first inner layer and the further layers and at least two first type leg portions may extend within the second inner layer. In other words, the number of inner layers may be two. Further, the number of inner layers may be three or four or greater than four. Therein, the number of first type leg portions extending within a respective one of the inner layers may decrease in radial direction away from the accommodation space.

The first leg portions of a first type hairpin conductor might be connected outside the stator core to all other first leg portions of first type hairpin conductor accommodated in the very same layer and at the same time to another hairpin conductor of another layer and slot.

Preferably, the leg portions are electrically isolated against each other within the slot. Advantageously, the leg portions are covered with an insulating material so that they are electrically insulated against each other within the slot. The insulating material may form an enamel coating.

Preferably, the accommodation space is provided radially inside of the stator core.

The above object is further solved by an electric machine, comprising a rotor and a stator according to the invention, the rotor being mounted rotatably with respect to the stator.

The electric machine may be a permanently or an electrically excited synchronous machine. Alternatively, the electric machine may be an induction machine.

The above object is further solved by an electric drive for a vehicle, comprising an electric machine according to the invention, a power converter configured to supply a multi-phase voltage to the stator winding and a housing, which accommodates the electric machine and the power converter.

The above object is further solved by a vehicle, comprising an electric machine according to the invention or an electric drive according to the invention; wherein the electric machine is configured to drive the vehicle.

Further advantages and details of the present invention are disclosed in the following embodiments and the schematical drawings, which show:
- Fig. 1: a principle drawing of a first embodiment of the stator according to the invention;
- Fig. 2: a principle drawing of a first type and a second type hairpin conductors according to the first embodiment;
- Fig. 3: a cross-section of the slot according to the first embodiment;
- Fig. 4: a longitudinal section of the slot according to the first embodiment;
- Fig. 5: a cross-section of the slot according to a second embodiment of the stator according to the invention; and
- Fig. 6: a principle drawing of embodiments of the vehicle, the electric drive and the electric machine according to the invention.

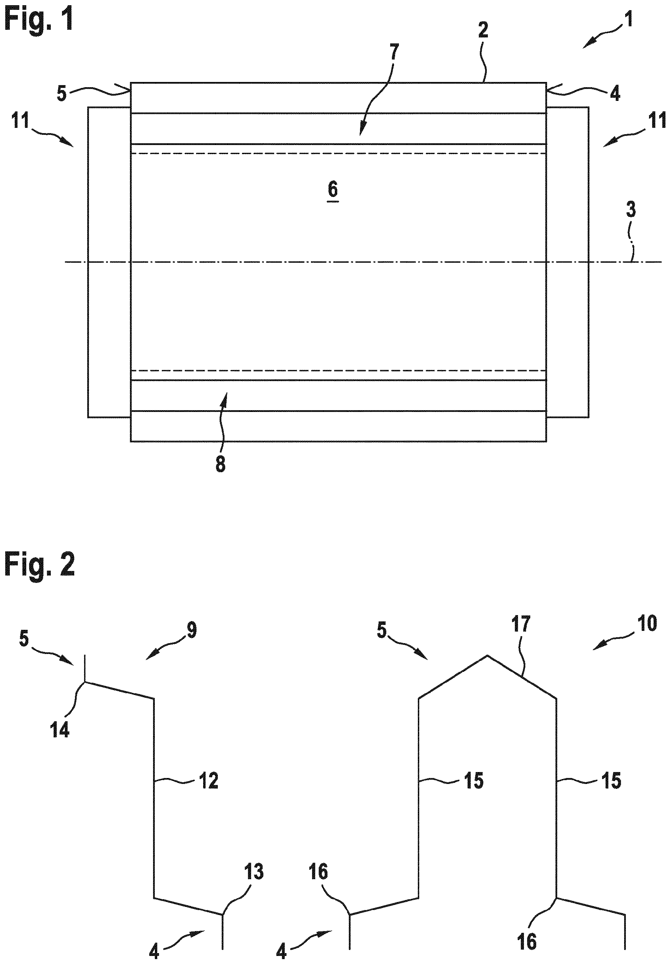

Fig. 1 is a principle drawing of a first embodiment of a stator 1.

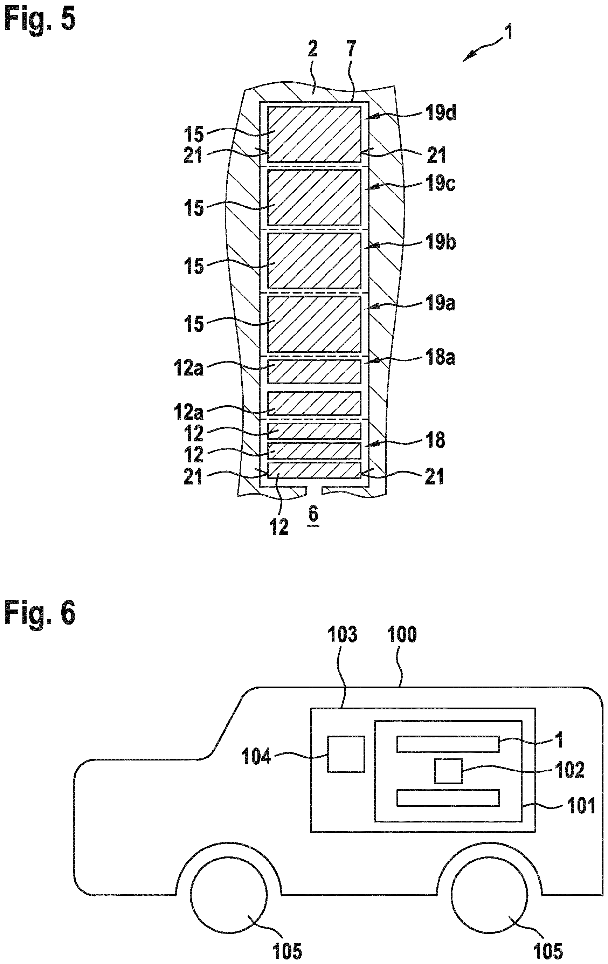

The stator 1 comprises a stator core 2, exemplarily made of a plurality of axially stacked and metal sheets electrically isolated against each other. The stator core 2 comprises a longitudinal axis 3, an axial first face side 4 and an axial second face side 5 opposite to the first face side 4. The stator core provides an accommodation space 6 for a rotor 102 of an electric machine 101 (see Fig. 6). Within the stator core 2, multiple slots 7, 8 are formed, which extend from the first face side 4 to the second face side 5 and are distributed in circumferential direction. For reasons of simplicity, only two slots 7, 8 are depicted in Fig. 1, although the stator 1 may have e.g., 36, 48, 54, 72 slots or more.

The stator further comprises multiple hairpin conductors 9, 10 (see Fig. 2), which form a stator winding 11, which is depicted by means of winding heads formed on both face sides 4, 5 in Fig. 1.

Fig. 2 is a principle drawing of a first type hairpin conductor 9 and a second type hairpin conductor 10 according to the first embodiment.

The first type hairpin conductor 9 comprises a first type leg portion 12, a first connection portion 13 arranged at the first type leg portion 12 on the first face side 4 and a second connection portion 14 arranged at the first type leg portion 12 on the second face side 5. The first type hairpin conductor 9 may be considered as I-pin.

The second type hairpin conductor 10 comprises a pair of second type leg portions 15, 16 and connection portions 16 arranged at each second type leg portion 15 at the first face side 4. Further the second type hairpin conductor 10 comprises a bending portion 17, which connects the pair of second type leg portions 15 at the second face side 5. The second type hairpin conductor 10 may be considered as U-pin.

The stator 1 comprises multiple first and second type hairpin conductors 9, 10. Therein, connection portions 13, 16 form the winding head at the first face side 4 and the bending portions 17 and second connection portions 14 form the winding head the second face side 5.

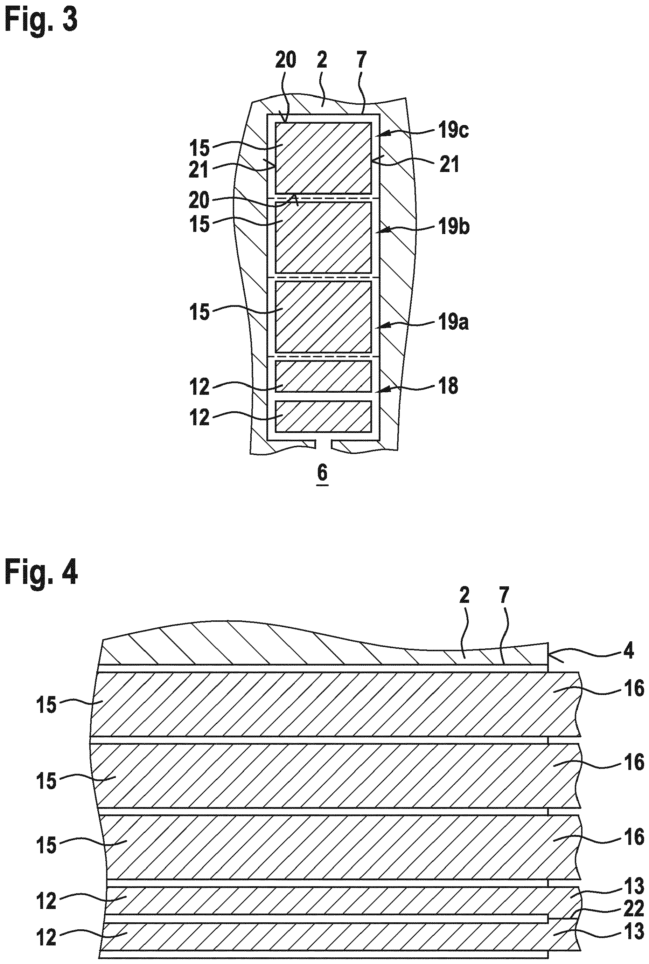

Fig. 3 and Fig. 4 show the slot 7 according to the first embodiment, wherein Fig. 3 is a cross-section and Fig. 4 is a longitudinal section. Therein, the slot 7 is representative for all further slots of the stator 1, including slot 8.

The slot 7 is radially divided into an inner layer 18 and into three further layers 19a, 19b, 19c. Therein, the inner layer 18 is closer to the accommodation space 6, whereas the further layers 19a-c are more distant to the accommodation space 6 than the inner layer 18. Boundary between adjacent layers 18, 19a-c are depicted by dashed lines. Exemplarily, each layer 18, 19a-c has the same radial extent. In another example, the layers 18 might have a greater extent than the layers 19a-c. Note, that the number of layers is chosen exemplarily and may be smaller or greater than four, but preferably an even number.

Within the inner layer 18, two first type leg portions 12 extend. Within each of the further layers 19a-c, one second type leg portion 15 extends. As can be seen in Fig. 3, in the drawing plane, which corresponds to a cross-section perpendicular to the longitudinal axis 3, the radial extent of each of the first type leg portion 12 is smaller than the radial extent of each of the second type leg portions 15. Particularly, each leg portion 12, 15 comprises two parallel long sides 20 and two parallel short sides 21 and the short sides 21 of the first type leg portions 12 are shorter than the short sides 21 of the second type leg portions 15. Exemplarily, the long sides 20 of all leg portions 12, 15 have the same length. In the present embodiment, the length of the short sides 21 of the first type leg portions 12 is half of the length of the short sides 21 of the second type leg portions 15. The sum of the length of the short sides 21 of the first type leg portion is the length of the short side 21 of the second type leg portions 15.

The first type leg portions 12 extending within the inner layer 18 of the slot 7 are electrically short-circuited at the first face side 4. In the present embodiment, the first type leg portions 12 are short-circuited by means of a welding connection 22 of the first connections portions 13, which is shown highly schematically in Fig. 4. Contrarily, the connection portions 16 of the second type leg portions 15 are connected to connection portions 13, 16 of other hairpin conductors 9, 10, the leg portions 12, 15 of which extend within another slot than slot 7.

Further, the leg portions 12, 15 are electrically isolated against each other within the slot 7 by means of an enamel coating (not shown).

Fig. 5 is a cross-section of the slot 7 according to a second embodiment of a stator 1. The second embodiment corresponds to first embodiment, wherein differences are described in the following and identical or equivalent components are denoted by the same reference numeral.

In the stator 1 according to the second embodiment, three first type leg portions 12 extend within the first inner layer 18. Thus, the short sides 21 of the first type leg portions 12 within the first inner layer 18 are a third of the length of the short sides 21 of the second type leg portions 15. The sum of the length of the short sides 21 of the first type leg portion is the length of the short side 21 of the second type leg portions 15.

Further, in the second embodiment four further layers 19a-d and a second inner layer 18a located between the first inner layer 18 and the further layers 19a-d are provided so that the total number of layers 18, 18a, 19a-d equals six. Therein, two first type leg portions 12a extend within the second inner layer 18a so that the number of first type leg portions 12, 12a decreases in radial direction away from the accommodation space 6. Consequently, the short sides 21 of the first type leg portions 12a within the second inner layer 18a are half the length of the short sides 21 of the second type leg portions 15

With regard to a further embodiment corresponding to the first embodiment, three second type leg portions 15 extend within the inner layer 18 comparable with the first inner layer 18 of the second embodiment.

With regard to a further embodiment corresponding to the second embodiment, a third inner layer located between second inner layer 18 and the further layers 19a-c is provided and two first type leg portions extend within the third inner layer. Therein, the number of first type leg portions 12 in the first inner layer 18 may be four and the number of first type leg portions 12a in the second inner layer 18 may be three. Also, in this embodiment, the third inner layer replaces one of the further layers 19a-d or an additional further layer is provided such that the number of layers is even.

Fig. 6 is a principle drawing of embodiments of the vehicle 100, an electric machine 101 and an electric drive 103.

The vehicle 100 comprises an electric machine 101, e.g., a permanently or electrically excited synchronous motor or an induction motor. The electric machine comprises a stator 1 according to any of the afore-mentioned embodiments and a rotor 102. The rotor 102 is mounted rotatably around the longitudinal axis 3 within the accommodation space 6 (see Fig. 1). The electric drive 103 comprises the electric machine 101 and a power converter 104 configured to supply a multi-phase voltage to the stator winding and a housing (not shown), which accommodates the electric machine 101 and the power converter 104.

Furthermore, the vehicle 100 comprises wheels 105. The electric machine or the electric drive 103, respectively, is configured to drive at least one of the wheels 105 indirectly, e.g., via a gear box (not shown), or directly, e.g., as a wheel hub motor. The vehicle 100 may further comprise an axle (not shown) coupled with the wheel 105, the axle being directly or indirectly driven by the electric machine 101.

The vehicle 100 is a battery-electric vehicle (BEV), a vehicle supplied via a fuel cell or a hybrid vehicle, which further comprises a combustion engine (not shown).

## Claims

1. Stator (1) for an electric machine (101), comprising:
- a stator core (2) comprising a longitudinal axis (3), an axial first face side (4) and an axial second face side (5) opposite to the first face side (4), the stator core (2) providing an accommodation space (6) for a rotor (102) of the electric machine (101);
- multiple hairpin conductors (9, 10) having first type leg portions (12, 15) and second type leg portions (15), the hairpin conductors (9, 10) being connected to each other so as to form a stator winding; and
- a slot (7) formed within the stator core (2) and radially divided into an inner layer (18) located closest to the accommodation space (6) and into further layers (19a-d) being more distant to the accommodation space (6) than the inner layer (18);
wherein
- two first type leg portions (12) extend within the inner layer,
- one second type leg portion (15) extends within each of the further layers (19a-d) and
- in a cross-section perpendicular to the longitudinal axis (3), the radial extent of each of the first type leg portions (12) is smaller than the radial extent of each of the second type leg portions (15);
**characterized in that**
the first type leg portions (12) are electrically short-circuited at the first face side (4).

2. Stator according to claim 1, wherein
the first type leg portions (12) are short-circuited by means of a welding connection (22) of connections portion (13) of the hairpin conductors (9), each connection portion (13) extending out of the stator core (2) at the first face side (4).

3. Stator according to claim 1 or 2, wherein
the first type leg portions (12) are formed by first type hairpin conductors (9) each having the first type leg portion (12) and a connection portion (14) at the second face side (5), the connection portion (14) being connected in an electrically conductive and mechanical manner with the connection portion (14) of another one of the first type hairpin conductors (9) outside the stator core (2).

4. Stator according to any of the preceding claims, wherein
pairs of second type leg portions (15) are formed by second type hairpin conductors (10) each having the pair of second type leg portions (15) and a bending portion (17) at the second face side (5), each second type hairpin conductor (10) being formed by a single bent metal rod.

5. Stator according to claim 4, wherein
each second type leg portion (15) of each second type hairpin conductor (10) is connected in an electrically conductive and mechanical manner with another second type leg portion (15) on the first face side (4) outside the stator core (2).

6. Stator according to any of the preceding claims, wherein
at least one further first type leg portion (12) extends within the inner layer (18).

7. Stator according to any of the preceding claims, wherein
the slot (7) is further divided into a second inner layer (18a) located between the first inner layer (18) and the further layers (19a-d), wherein at least two first type leg portions (12a) extend within the second inner layer (18a).

8. Stator according to claim 6 and 7, wherein
the number of first type leg portions (12, 12a) extending within a respective one of the inner layers (18, 18a) decreases in radial direction away from the accommodation space (6).

9. Stator according to any of the preceding claims, wherein
the leg portions (12, 12a, 15) are electrically isolated against each other within the slot (7).

10. Stator according to any of the preceding claims, wherein
the accommodation space (6) is provided radially inside of the stator core (2).

11. Electric machine (101), comprising a rotor (102) and a stator (1) according to any of the preceding claims, the rotor (102) being mounted rotatably with respect to the stator (1).

12. Electric drive (103) for a vehicle (100), comprising an electric machine (101) according to claim 11, a power converter (104) configured to supply a multi-phase voltage to the stator winding and a housing, which accommodates the electric machine (101) and the power converter (104).

13. Vehicle (100), comprising
- an electric machine (101) according to claim 11, or
- an electric drive (103) according to claim 12;
wherein the electric machine (101) is configured to drive the vehicle (100).
